# EUROPEAN PATENT APPLICATION

(11) **EP 2 784 027 A1**
(43) Date of publication of application: **01.10.2014**
(21) Application number: 14155696.9
(22) Date of filing: 19.02.2014
(51) Int. Cl.: C01G 51/00, H01M 4/1391, H01M 4/525, C23C 18/12

(54) **LiCoO2 film-forming precursor solution and method of forming LiCoO2 film using the same**

(30) Priority: 27.03.2013 JP 2013065839
(71) Applicant: Mitsubishi Materials Corporation, Chiyoda-ku Tokyo 100-8117 (JP)
(72) Inventor: NOGUCHI, Takashi, Naka-shi, Ibaraki 1002-14 (JP); WATANABE, Toshiaki, Sanda-shi, Hyogo (JP); SAKURAI, Hideaki, Naka-shi, Ibaraki 1002-14 (JP); SOYAMA, Nobuyuki, Naka-shi, Ibaraki 1002-14 (JP)
(74) Representative: Gille Hrabal

(57) **Abstract**

A LiCoO₂ film-forming precursor solution is a precursor solution used to form a LiCoO₂ film which is used as a positive electrode material of a thin film lithium secondary battery. In this LiCoO₂ film-forming precursor solution, an organic lithium compound and an organic cobalt compound are dissolved in an organic solvent. In addition, the organic lithium compound is a lithium salt of a carboxylic acid represented by a formula CₙH₂ₙ₊₁COOH (wherein, 2≤n≤8).

## Description

### BACKGROUND OF THE INVENTION

### Field of the Invention

The present invention relates to a precursor solution used to form a LiCoO₂ film and a method of forming a LiCoO₂ film using this solution.

Priority is claimed on Japanese Patent Application No. 2013-065839, filed on March 27, 2013, the content of which is incorporated herein by reference.

### Description of Related Art

Japanese Unexamined Patent Application, First Publication No. 2008-159399 discloses a lithium ion secondary battery. This lithium ion secondary battery is a thin film solid secondary battery in which a positive electrode collector layer including a positive electrode collector, a positive electrode active material layer including a positive electrode active material, a solid electrolyte layer including an electrolyte, a negative electrode active material layer including a negative electrode active material, and a negative electrode collector layer including a negative electrode collector are laminated on a substrate. The positive electrode active material layer contains one or two or more oxides selected from the group consisting of lithium-manganese oxides, lithium-cobalt oxides, lithium-nickel oxides, lithium-manganese-cobalt oxides, and lithium-titanium oxides (for example, refer to claims 5, 7, and 9 and paragraphs [0024], [0026], and [0041]). In this lithium ion secondary battery, the positive electrode collector layer, the positive electrode active material layer, the solid electrolyte layer, the negative electrode active material layer, and the negative electrode collector layer are formed by sputtering. In addition, as the lithium-manganese oxides, LiMn₂O₄, Li₂Mn₂O₄, or the like can be used. As the lithium-cobalt oxides, LiCoO₂, LiCo₂O₄, or the like can be used.

In the lithium ion secondary battery configured as above, a lithium-manganese oxide, a lithium-cobalt oxide, or the like from which or on which lithium ions can be desorbed or adsorbed is used as a positive electrode active material. As a result, many lithium ions can be stored in or released from the positive electrode active material, and charge-discharge characteristics of the lithium ion secondary battery are further improved. In addition, by forming the positive electrode active material layer and the like using sputtering, the time required to manufacture a lithium ion secondary battery, particularly, a thin film solid secondary battery can be reduced.

Meanwhile, Japanese Unexamined Patent Application, First Publication No. 2010-083700 discloses a laminate including: a substrate; and a cobalt oxide film formed of a plurality of single crystals of a cobalt oxide that are grown on a surface of the substrate, in which the cobalt oxide is formed of Co, O, and a doping metal element, and the doping metal element is Li, Na, or Ca (for example, refer to claims 1 to 3 and paragraphs [0022], [0077], and [0078]). In order to form the cobalt oxide film of the laminate, first, cobalt nitrate (Co source), lithium nitrate (Li source), and a mixed solution containing 80 mass% of water (solvent) and 20 mass% of acetyl acetone are prepared. Next, 0.1 mol/L of the cobalt nitrate and 0.05 mol/L of the lithium nitrate are dissolved in this mixed solution, thereby obtaining 100 mL of a cobalt oxide film-forming solution. Further, a substrate (slide glass) is heated to 400°C using a hot plate, and 100 mL of the cobalt oxide film-forming solution is sprayed on the substrate using an ultrasonic nebulizer, thereby forming a cobalt oxide film on the substrate.

In the laminate configured as above, since the cobalt oxide film is formed of the single crystals of the cobalt oxide, typically, substantially no crystal defects or impurities are present, and the interface resistance between particles is lower than that of a cobalt oxide film obtained by allowing particles of a cobalt oxide to aggregate. Therefore, when a specific carrier is conducted in the cobalt oxide film, the conductivity of this carrier can be improved. Specifically, when the cobalt oxide film is formed of single crystals of LiCoO₂, the laminate can be used as a positive electrode having superior lithium conductivity and electron conductivity.

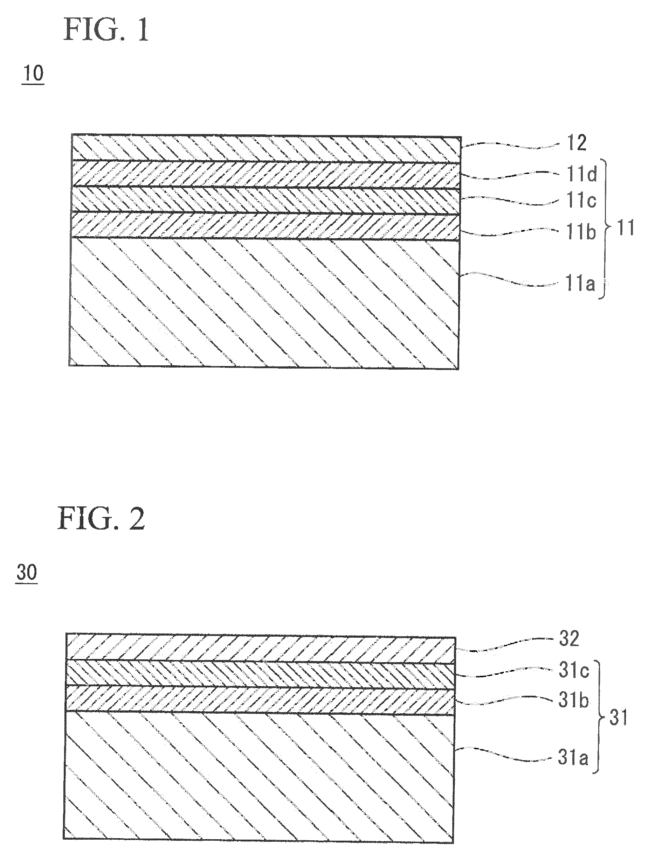

Meanwhile, Y H. Rho, K. Kanamura, T. Umegaki, J. Electrochem. Soc., 150[1] (2003), pp. A107 to A111 discloses a technique of forming a LiCoO₂ or LiMn₂O₄ thin film electrode for a rechargeable Li battery with a sol-gel method using polyvinyl pyrrolidone (PVP) (for example, refer to Abstract, Figure 1, and Table 1). In this technique of forming a thin film electrode of LiCoO₂ or the like with a sol-gel method, a Li-Co-O sol is prepared using PVP. Specifically, the Li-Co-O sol is prepared by adding a second mixed solution to a first mixed solution, the first mixed solution being obtained by mixing 2-propanol (i-C₃H₇OH), PVP, acetic acid (CH₃COOH), and lithium alkoxide (LiOC₃H₇ⁱ) at a predetermined ratio and the second mixed solution being obtained by mixing water (H₂O) and cobalt (II) acetate tetrahydrate (Co(CH₃COOH)_{2·}H₂O) at a predetermined ratio. In addition, a Li-Mn-O sol is prepared by adding a third mixed solution to the first mixed solution, the third mixed solution being obtained by mixing water (H₂O) and manganese (II) acetate tetrahydrate (Mn(CH₃COOH)₂·H₂O) at a predetermined ratio. The sol is coated on an Au substrate with a spin coater. Through this spin coating process, the sol is converted into a gel film. By heating the gel film at 800°C for 1 hour, a thin film is formed.

As a result of investigating properties of the formed thin film by X-ray diffraction and an observation using a scanning electron microscope, it was found that the gel films formed using the Li-Co-O sol and the Li-Mn-O sol were LiCoO₂ having a rock salt type structure and LiMn₂O₄ having a spinel structure, respectively. In addition, as a result of evaluating electrochemical properties of the thin films by a charge-discharge test and cyclic voltammetry in a mixed solution of ethylene carbonate and diethyl carbonate (volume ratio=1:1) containing 1.0 mol/dm³ of LiClO₄, it was found that these thin films had superior electrochemical properties as electrodes.

Meanwhile, H. Porthault, F. Le Cras, S. Franger, J. Power Sources, 195[19] (2010), pp.6262 to 6267 discloses a technique of synthesizing a LiCoO₂ thin film with a sol-gel method in which acrylic acid (AA) is used as a chelating agent (for example, refer to Abstract, line 5 from the bottom of the lower right column of p. 6262 to line 10 from the top of the upper left column of p. 6263, and line 4 from the top of the right column of p. 6267 to line 7 from the top of the same column of the same page). In this technique of synthesizing a LiCoO₂ thin film with a sol-gel method, in order to form a dense film as a positive electrode of a lithium battery, a method of forming a gel is optimized by controlling various solvents (ethylene glycol or water) and a molar ratio of precursors (Li, Co, and AA). Specifically, a LiCoO₂ material is synthesized with a sol-gel method. First, salts such as lithium acetate (Li(CH₃CO₂)·H₂O) and cobalt acetate (CO(CH₃CO₂)₂·4H₂O) are dissolved in a solvent (distilled water (W) or ethylene glycol (EG)), followed by mixing with acrylic acid (AA). In this process, acrylic acid functions as a chelating agent to obtain a gel. In addition, the molar ratio Li:Co varies in a range from 1:0 to 1:1, and the molar ratio of the total metallic ions charges (M⁺) to acrylic acid (AA) varies in a range from 1:0 to 1:1. The obtained solution was stirred at a temperature of 75°C for 24 hours. In the case of an aqueous solution, the solution is evaporated by being held at 75°C for several hours until an ultraviolet gel having a desired viscosity is obtained. In the case of an ethylene glycol solution, a desired viscosity is directly obtained by changing the entire concentration of the initial composition of a reactant. Further, a SiO₂ film, a SiN film, a TiO₂ film, and an Au film are laminated on a Si substrate in this order, and the gel is formed by spin coating on the Au film, which is highest, as a gel film. The gel film formed on the Si substrate is baked at 800°C for 5 hours, thereby forming a thin film. In order to increase the density of the thin film, this baking is performed to obtain an R-3m phase (HT- LiCoO₂) after depositing the gel film through a process including one or plural steps.

The chemical properties of the gel prepared as above are investigated by Fourier-transform infrared (FTIR) spectroscopy, and the crystallinity of the thin film formed as above is analyzed by X-ray diffraction (XRD). As a result, it was able to be confirmed from infrared spectra of the gel obtained by FTIR spectroscopy that acrylic acid functioned as a chelating agent used to form a gel immediately after being present in the solution without the necessity of heating. In addition, it was found from a X-ray pattern of the thin film obtained by XRD that the R-3m phase of LiCoO₂ was obtained by a heat treatment at 800°C.

### SUMMARY OF THE INVENTION

However, in the lithium ion secondary battery disclosed in Japanese Unexamined Patent Application, First Publication No. 2008-159399 of the related art, since the positive electrode active material layer and the like are formed by sputtering, it is necessary for a large-sized sputtering device be used, and thus there is a problem in that the manufacturing costs are increased. In addition, in the laminate disclosed in Japanese Unexamined Patent Application, First Publication No. 2010-083700 of the related art, since cobalt acetate and lithium acetate are dissolved in a mixed solution of water and acetyl acetone, highly reactive nitrogen monoxide or nitrogen dioxide may be produced during film formation depending on film forming processes, and thus there is a problem in that stable film formation cannot be performed. Further in the technique of forming a thin film electrode of LiCoO₂ or the like with a sol-gel method disclosed in Y. H. Rho, K. Kanamura, T. Umegaki, J. Electrochem. Soc., 150[1] (2003), pp. A107 to A111 of the related art and in the technique of synthesizing a LiCoO₂ thin film with a sol-gel method disclosed in H. Porthault, F. Le Cras, S. Franger, J. Power Sources, 195[19] (2010), pp.6262 to 6267 of the related art, since an acetate is used for preparing a gel solution, precipitates are likely to be formed, and thus there is a problem in that the storage stability is poor.

A first object of the invention is to provide a method of forming a LiCoO₂ film using a LiCoO₂ film-forming precursor solution, in which the LiCoO₂ film-forming precursor solution can be coated on the substrate through a relatively simple process without using a large-sized sputtering device, and film formability is superior. A second object of the invention is to provide a LiCoO₂ film-forming precursor solution having superior storage stability.

According to a first aspect of the invention, there is provided a LiCoO₂ film-forming precursor solution used to form a LiCoO₂ film which is used as a positive electrode material of a thin film lithium secondary battery, the LiCoO₂ film-forming precursor solution including: an organic lithium compound; an organic cobalt compound; and an organic solvent, in which the organic lithium compound is a lithium salt of a carboxylic acid represented by a formula CₙH₂ₙ₊₁COOH (wherein, 2≤n≤8).

According to a second aspect of the invention, in the LiCoO₂ film-forming precursor solution according to the first aspect, the organic cobalt compound is preferably a cobalt salt of a carboxylic acid represented by a formula CₙH₂ₙ₊₁COOH (wherein, 2≤n≤8).

According to a third aspect of the invention, in the LiCoO₂ film-forming precursor solution according to the first or second aspect, the organic lithium compound is preferably a lithium salt of 2-ethylbutyric acid or 2-ethylhexanoic acid, and the organic cobalt compound is preferably a cobalt salt of 2-ethylbutyric acid or 2-ethylhexanoic acid.

According to a fourth aspect of the invention, in the LiCoO₂ film-forming precursor solution according to any one of the first to third aspects, the organic solvent is preferably 1-butanol, 2-ethylbutrylic acid, 2-ethylhexanoic acid, or 3-methylbutyl acetate.

According to a fifth aspect of the invention, there is provided a method of forming a LiCoO₂ film, in which the LiCoO₂ film-forming precursor solution according to any one of the first to fourth aspects is coated on a substrate to be used as a positive electrode material of a thin film lithium secondary battery.

According to a sixth aspect of the invention, there is provided a method of manufacturing a thin film lithium secondary battery which includes a LiCoO₂ film formed using the method according to the fifth aspect.

The LiCoO₂ film-forming precursor solution according to the first aspect contains: an organic lithium compound; an organic cobalt compound; and an organic solvent, in which the organic lithium compound is a lithium salt of a carboxylic acid represented by a formula CₙH₂ₙ₊₁COOH (wherein, 2≤n≤8). As a result, a precursor solution having superior lipophilicity and superior storage stability can be obtained.

In the LiCoO₂ film-forming precursor solution according to the second aspect, the organic cobalt compound is a cobalt salt of a carboxylic acid represented by a formula CₙH₂ₙ₊₁COOH (wherein, 2≤n≤8). As a result, a precursor solution having superior lipophilicity and superior storage stability can be obtained.

In the method of forming a LiCoO₂ film according to the fifth aspect, the LiCoO₂ film-forming precursor solution according to any one of the first to fourth aspects is coated on a substrate. As a result, the LiCoO₂ film-forming precursor solution can be uniformly coated on the substrate through a relatively simple process without using a large-sized sputtering device.

### BRIEF DESCRIPTION OF THE DRAWINGS

FIG 1 is a cross-sectional view illustrating configurations of a positive electrode material according to an embodiment of the invention and a positive electrode material according to Comparative Test 2.
FIG 2 is a cross-sectional view illustrating configurations of a positive electrode material according to an embodiment of the invention and a positive electrode material according to Comparative Test 3.

### DETAILED DESCRIPTION OF THE INVENTION

Next, embodiments of the invention will be described with reference to the drawings. A LiCoO₂ film-forming precursor solution according to an embodiment of the invention is a precursor solution used to form a LiCoO₂ film which is used as a positive electrode material of a thin film lithium secondary battery. This precursor solution contains an organic lithium compound, an organic cobalt compound, and an organic solvent. It is preferable that, in this precursor solution, the organic lithium compound and the organic compound be dissolved in the organic solvent.

The organic lithium compound is a lithium salt of a carboxylic acid represented by a formula CₙH₂ₙ₊₁COOH (wherein, 2≤n≤8). The reason for limiting n to be in the range of 2≤n≤8 is as follows. When n is less than 2, the storage stability of the precursor solution is poor, and precipitates are likely to be formed. When n is more than 8, storage stability in a part of carboxylic acids is poor, and precipitates are likely to be formed.

Examples of the organic lithium compound include lithium salts of propionic acid (propanoic acid; n=2), n-butyric acid (butanoic acid; n=3), pentanoic acid (n-valeric acid; n=4), hexanoic acid (n-caproic acid; n=5), 2-ethylbutyic acid (2-ethylbutanoic acid; n=5), heptanoic acid (n-enanthic acid; n=6), octanoic acid (n-caprylic acid; n=7), 2-ethylhexanoic acid (2-ethylcaproic acid; n=7), and nonanoic acid (n-pelargonic acid; n=8). Among these lithium salts, a lithium salt of 2-ethylbutyric acid (n=5) or a lithium salt of 2-ethylhexanoic acid (n=7) is particularly preferably used.

As the organic cobalt compound, a cobalt salt of a carboxylic acid represented by a formula CₙH₂ₙ₊₁COOH (wherein, 2≤n≤8) is preferably used.

Examples of the organic cobalt compound include cobalt salts of propionic acid (n=2), n-butyric acid (n=3), pentanoic acid (n=4), hexanoic acid (n=5), 2-ethylbutyic acid (n=5), heptanoic acid (n=6), octanoic acid (n=7), 2-ethylhexanoic acid (n=7), and nonanoic acid (n=8). Among these cobalt salts, a cobalt salt of 2-ethylbutyric acid (n=5) or a cobalt salt of 2-ethylhexanoic acid (n=7) is particularly preferably used.

As the organic solvent, for example, 1-butanol, 2-ethylbutrylic acid, 2-ethylhexanoic acid, or 3-methylbutyl acetate (isoamyl acetate) is preferably used. Among these organic solvents, 1-butanol is particularly preferably used.

A method of preparing the LiCoO₂ film-forming precursor solution configured as above will be described. First, a Li source of the organic lithium compound, a Co source of the organic cobalt compound, and a carboxylic acid (represented by the formula CₙH₂ₙ₊₁COOH (wherein 2≤n≤8)) are put into a reaction vessel with a predetermined ratio, followed by reflux in a nitrogen atmosphere, an argon gas atmosphere, or an inert gas atmosphere. As a result, the organic lithium compound and the organic cobalt compound are synthesized.

Examples of the Li source of the organic lithium compound include lithium carbonate or the like. Examples of the Co source of the organic cobalt compound include cobalt carbonate or the like.

Next, this synthesized solution is distillated under reduced pressure to remove by-products such as water or carbon dioxide from the solution. This solution is diluted with the organic solvent such as 1-butanol, 2-ethylbutrylic acid, 2-ethylhexanoic acid, or 3-methylbutyl acetate.

Further, the solution diluted with the organic solvent is filtered to remove particles of by-products from the solution. As a result, a LiCoO₂ film-forming precursor solution, which contains metal compounds having a ratio of metals, that is, a mass ratio of Li to Co of 1:1 and a concentration of 1 mass% to 20 mass% in terms of oxides, is obtained.

In addition, the ratio in terms of oxides refers to a ratio of metal oxides to 100 mass% of the precursor solution used to form a LiCoO₂ film which is calculated under the assumption that all of Li and Co in the precursor solution used to form a LiCoO₂ film are converted into the metal oxides.

In the LiCoO₂ film-forming precursor solution prepared as above, the organic lithium compound and the organic cobalt compound are dissolved in the organic solvent, and the organic lithium compound is a lithium salt of a carboxylic acid represented by the formula CₙH₂ₙ₊₁COOH (wherein, 2≤n≤8). As a result, a precursor solution having superior lipophilicity and superior storage stability can be obtained. In addition, the organic cobalt compound is a cobalt salt of a carboxylic acid represented by the formula CₙH₂ₙ₊₁COOH (wherein, 2≤n≤8). As a result, a precursor solution having superior lipophilicity and superior storage stability can be obtained.

A method of forming a LiCoO₂ film on a substrate using the LiCoO₂ film-forming precursor solution prepared as above to manufacture a positive electrode material will be described based on FIGS. 1 and 2. First, the LiCoO₂ film-forming precursor solution is coated on substrates 11 and 31 by spin coating, dip coating, liquid source misted chemical deposition (LSMCD), or the like to form coating films thereon, respectively. Examples of the substrates 11 and 31 include a heat-resistant laminated substrate in which a silicon oxide layer 11b (SiO₂ layer), a titanium oxide layer 11c (TiO₂ layer), and a platinum layer 11d (Pt layer) are deposited on a silicon substrate 11a (Si substrate) in this order; and a heat-resistant laminated substrate in which a titanium oxide layer 31b (TiO₂ layer) and a platinum layer 31c (Pt layer) are deposited on a polycrystalline alumina (PCA) substrate (Al₂O₃ substrate) 31 a in this order. The LiCoO₂ film-forming precursor solution according to the embodiment is coated on the platinum layer 11d and 31 c of the substrates 11 and 31, respectively. As a result, the LiCoO₂ film-forming precursor solution can be uniformly coated on the substrates through a relatively simple process without using a large-sized sputtering device.

Next, the coating films on the platinum layers 11d and 31 c of the substrates 11 and 31 are dried by being held in the air at a temperature of 150°C to 550°C for 1 minute to 30 minutes. The thickness of a dried coating film formed per each coating process is preferably about 30 nm to 200 nm. Next, after the coating process and the drying process are repeated a predetermined number of times (for example, about 5 times to 50 times), the coating films on the platinum layers 11d and 31c of the substrates 11 and 31 are baked by rapid thermal annealing (RTA) by being held in an oxygen atmosphere at a temperature of 350°C to 800°C (a crystallization temperature or higher of the coating films) for 1 minute to 60 minutes. As a result, LiCoO₂ films 12 and 32 having a thickness of about 1 µm to 10 µm can be formed on the platinum layers 11d and 31c of the substrates 11 and 31.

A method of confirming that the LiCoO₂ films formed as above have properties as positive electrode materials 10 and 30 of a thin film lithium secondary battery will be described.

By supplying power such that the platinum layers below the LiCoO₂ films are positive electrodes, the LiCoO₂ films and the substrates are set as positive electrode materials, and metallic lithium which is a negative electrode is set as a negative electrode material. Next, 1 mol/dm³ of lithium hexafluorophosphate (LiPF₆) is dissolved in a solvent, which is obtained by mixing ethylene carbonate and diethyl carbonate with a volume ratio of 1:1, to prepare an electrolyte solution. This electrolyte solution is put into a glass vessel, and the positive electrode material and the negative electrode material are dipped therein. In a state where the positive electrode and the negative electrode are exposed to the outside of the vessel, the vessel is filled with argon gas and is sealed in an argon gas atmosphere. As a result, a beaker cell type secondary battery structure is formed. In the beaker cell type secondary battery prepared as above, lithium ions contained in the LiCoO₂ film can be adsorbed or desorbed, and battery characteristics can be exhibited.

### EXAMPLES

Next, Examples of the invention and Comparative Examples will be described in detail.

### [Example 1]

First, lithium carbonate (Li source of the organic lithium compound), cobalt carbonate (Ca source of the organic cobalt compound), and 2-ethylbutyric acid (represented by the formula C₅H₁₁COOH) were put into a reaction vessel with a molar ratio Li:Co:C₅H₁₁COOH of 1:1:7, followed by reflux in a nitrogen atmosphere. As a result, a solution in which lithium 2-ethylbutyrate (a lithium salt of a carboxylic acid represented by the formula CₙH₂ₙ₊₁COOH (wherein, n=5)) and cobalt 2-ethylbutyrate (a cobalt salt of a carboxylic acid represented by the formula CₙH₂ₙ₊₁COOH (wherein, n=5)) were synthesized was obtained. Next, this solution was distillated under reduced pressure to remove by-products such as water or carbon dioxide from the solution. This solution was diluted with the addition of 1-butanol such that the concentration of the total amount of Li and Co was 5 mass% in terms of metal oxides. The diluted solution was filtered to removed particles of by-products from the solution. As a result, a LiCoO₂ film-forming precursor solution, which contains metal compounds having a ratio of metals, that is, a mass ratio of Li to Co of 1:1 and a concentration of 5 mass% in terms of oxides, was obtained. This LiCoO₂ film-forming precursor solution was set as the solution of Example 1.

### [Example 2]

Lithium carbonate (Li source of the organic lithium compound), cobalt carbonate (Ca source of the organic cobalt compound), and 2-ethylhexanoic acid (represented by the formula C₇H₁₅COOH) were put into a reaction vessel with a molar ratio Li:Co:C₇H₁₅COOH of 1:1:7, followed by reflux in a nitrogen atmosphere. As a result, a solution in which lithium 2-ethylhexanoate (a lithium salt of a carboxylic acid represented by the formula CₙH₂ₙ₊₁COOH (wherein, n=7)) and cobalt 2-ethylhexanoate (a cobalt salt of a carboxylic acid represented by the formula CₙH₂ₙ₊₁COOH (wherein, n=7)) were synthesized was obtained. With the same method as that of Example 1 except for the above-described configurations, a LiCoO₂ film-forming precursor solution was obtained. This LiCoO₂ film-forming precursor solution was set as the solution of Example 2.

### [Example 3]

Lithium carbonate (Li source of the organic lithium compound), cobalt carbonate (Ca source of the organic cobalt compound), and propionic acid (represented by the formula C₂H₅COOH) were put into a reaction vessel with a molar ratio Li:CO:C₂H₅COOH of 1:1:7, followed by reflux in a nitrogen atmosphere. As a result, a solution in which lithium propionate (a lithium salt of a carboxylic acid represented by the formula CₙH₂ₙ₊₁COOH (wherein, n=2)) and cobalt propionate (a cobalt salt of a carboxylic acid represented by the formula CₙH₂ₙ₊₁COOH (wherein, n=2)) were synthesized was obtained. With the same method as that of Example 1 except for the above-described configurations, a LiCoO₂ film-forming precursor solution was obtained. This LiCoO₂ film-forming precursor solution was set as the solution of Example 3.

### [Example 4]

Lithium carbonate (Li source of the organic lithium compound), cobalt carbonate (Ca source of the organic cobalt compound), and pentanoic acid (represented by the formula C₄H₉COOH) were put into a reaction vessel with a molar ratio Li:Co:C₄H₉COOH of 1:1:7, followed by reflux in a nitrogen atmosphere. As a result, a solution in which lithium pentanoate (a lithium salt of a carboxylic acid represented by the formula CₙH₂ₙ₊₁COOH (wherein, n=4)) and cobalt pentanoate (a cobalt salt of a carboxylic acid represented by the formula CₙH₂ₙ₊₁COOH (wherein, n=4)) were synthesized was obtained. With the same method as that of Example 1 except for the above-described configurations, a LiCoO₂ film-forming precursor solution was obtained. This LiCoO₂ film-forming precursor solution was set as the solution of Example 4.

### [Example 5]

Lithium carbonate (Li source of the organic lithium compound), cobalt carbonate (Ca source of the organic cobalt compound), and nonanoic acid (represented by the formula C₈H₁₇COOH) were put into a reaction vessel with a molar ratio Li:Co:C₈H₁₇COOH of 1:1:7, followed by reflux in a nitrogen atmosphere. As a result, a solution in which lithium nonanoate (a lithium salt of a carboxylic acid represented by the formula CₙH₂ₙ₊₁COOH (wherein, n=8)) and cobalt nonanoate (a cobalt salt of a carboxylic acid represented by the formula CₙH₂ₙ₊₁COOH (wherein, n=8)) were synthesized was obtained. With the same method as that of Example 1 except for the above-described configurations, a LiCoO₂ film-forming precursor solution was obtained. This LiCoO₂ film-forming precursor solution was set as the solution of Example 5.

### [Example 6]

The solution, which was synthesized and distillated under reduced pressure to remove by-products from the solution with the same method as that of Example 1, was diluted with the addition of 2-ethylbutyric acid such that the concentration of the total amount of Li and Co was 5 mass% in terms of metal oxides. With the same method as that of Example 1 except for the above-described configurations, a LiCoO₂ film-forming precursor solution was obtained. This LiCoO₂ film-forming precursor solution was set as the solution of Example 6.

### [Example 7]

The solution, which was synthesized and distillated under reduced pressure to remove by-products from the solution with the same method as that of Example 1, was diluted with the addition of 2-ethylhexanoic acid such that the concentration of the total amount of Li and Co was 5 mass% in terms of metal oxides. With the same method as that of Example 1 except for the above-described configurations, a LiCoO₂ film-forming precursor solution was obtained. This LiCoO₂ film-forming precursor solution was set as the solution of Example 7.

### [Example 8]

The solution, which was synthesized and distillated under reduced pressure to remove by-products from the solution with the same method as that of Example 1, was diluted with the addition of 3-methylbutyl acetate such that the concentration of the total amount of Li and Co was 5 mass% in terms of metal oxides. With the same method as that of Example 1 except for the above-described configurations, a LiCoO₂ film-forming precursor solution was obtained. This LiCoO₂ film-forming precursor solution was set as the solution of Example 8.

### [Example 9]

The solution, which was synthesized and distillated under reduced pressure to remove by-products from the solution with the same method as that of Example 1, was diluted with the addition of 1-propanol such that the concentration of the total amount of Li and Co was 5 mass% in terms of metal oxides. With the same method as that of Example 1 except for the above-described configurations, a LiCoO₂ film-forming precursor solution was obtained. This LiCoO₂ film-forming precursor solution was set as the solution of Example 9.

### [Comparative Example 1]

Lithium carbonate (Li source of the organic lithium compound), cobalt carbonate (Ca source of the organic cobalt compound), and acetic acid (represented by the formula CH₃COOH) were put into a reaction vessel with a molar ratio Li:Co:CH₃COOH of 1:1:7, followed by reflux in a nitrogen atmosphere. As a result, a solution in which lithium acetate (a lithium salt of a carboxylic acid represented by the formula CₙH₂ₙ₊₁COOH (wherein, n=1)) and cobalt acetate (a cobalt salt of a carboxylic acid represented by the formula CₙH₂ₙ₊₁COOH (wherein, n=1)) were synthesized was obtained. With the same method as that of Example 1 except for the above-described configurations, a LiCoO₂ film-forming precursor solution was obtained. This LiCoO₂ film-forming precursor solution was set as the solution of Comparative Example 1.

### [Comparative Example 2]

Lithium carbonate (Li source of the organic lithium compound), cobalt carbonate (Ca source of the organic cobalt compound), and decanoic acid (represented by the formula C₉H₁₉COOH) were put into a reaction vessel with a molar ratio Li:Co:C₉H₁₉COOH of 1:1:7, followed by reflux in a nitrogen atmosphere. As a result, a solution in which lithium decanoate (a lithium salt of a carboxylic acid represented by the formula CₙH₂ₙ₊₁COOH (wherein, n=9)) and cobalt decanoate (a cobalt salt of a carboxylic acid represented by the formula CₙH₂ₙ₊₁COOH (wherein, n=9)) were synthesized was obtained. With the same method as that of Example 1 except for the above-described configurations, a LiCoO₂ film-forming precursor solution was obtained. This LiCoO₂ film-forming precursor solution was set as the solution of Comparative Example 2.

### [Comparative Test 1 and Evaluation]

Each of the LiCoO₂ film-forming precursor solutions of Examples 1 to 9 and Comparative Examples 1 and 2 was put into a vessel, an opening of this vessel was sealed with a cover, and the vessel is left to stand at room temperature for 1 day. Then, whether or not precipitates were formed in the precursor solution was investigated by visual inspection. The results are shown in Table 1.

### [Comparative Test 2 and Evaluation]

As illustrated in FIG 1, each of the LiCoO₂ film-forming precursor solutions of Examples 1 to 9 and Comparative Examples 1 and 2 was coated on the substrate 11 by spin coating to form a coating film thereon. In this case, the substrate 11 was the heat-resistant laminated substrate in which the silicon oxide layer 11b (SiO₂ layer), the titanium oxide layer 11c (TiO₂ layer), and the platinum layer 11d (Pt layer) are deposited on the silicon substrate 11a (Si substrate) in this order. In addition, the crystal orientation plane of the silicon substrate 11a was (100) plane. When each of the LiCoO₂ film-forming precursor solutions of Examples 1 to 9 and Comparative Examples 1 and 2 was coated on the platinum layer 11d, the wettability of the LiCoO₂ film-forming precursor solution on the platinum layer 11d was observed. Cases where the LiCoO₂ film-forming precursor solution was uniformly coated on the platinum layer 11d are represented by "Satisfactory", and cases where the LiCoO₂ film-forming precursor solution was not absorbed on the platinum layer 11d are represented by "Unsatisfactory". The results are shown in Table 1.

### [Comparative Test 3 and Evaluation]

As illustrated in FIG. 2, each of the LiCoO₂ film-forming precursor solutions of Examples 1 to 9 and Comparative Examples 1 and 2 was coated on the platinum layer 31c of the substrate 31 by spin coating to form a coating film thereon. Next, the coating film on the platinum layer 31c of the substrate 31 was dried by being held in the air at 400°C for 5 minutes. In this case, the substrate 31 was the heat-resistant laminated substrate in which the titanium oxide layer 31b (TiO₂ layer) and the platinum layer 31c (Pt layer) are deposited on the polycrystalline alumina (PCA) substrate (Al₂O₃ substrate) 31a in this order. The LiCoO₂ film-forming precursor solution was coated on the platinum layer 31 c of the substrate 31. Further, after the coating process and the drying process were repeated 20 times, the coating film on the platinum layer 31c of the substrate was baked by rapid thermal annealing (RTA) by being held in an oxygen atmosphere at 700°C (a crystallization temperature or higher of the coating film) for 1 minute. As a result, a LiCoO₂ film 32 having a thickness of about 1 µm was formed on the platinum layer 31 c of the substrate 31. The LiCoO₂ film 32 was measured using an X-ray diffractometer (Empyrean, manufactured by PANalytical) to obtain a peak intensity corresponding to a crystal plane of the LiCoO₂ film. The results are shown in Table 1. In the precursor solution of Comparative Example 1, precipitates were formed, and a uniformly dissolved solution was not obtained. Therefore, the wettability of the precursor solution of Comparative Example 1 was not measured, and a LiCoO₂ film was also not able to be formed. In addition, in Comparative Example 2, the wettability was poor, the precursor solution was not uniformly coated on the platinum layer 31c, and thus a LiCoO₂ film was also not able to be formed. Therefore, the peak intensity of a crystal plane of the LiCoO₂ film of Comparative Example 2 was not able to be measured.

**Table 1**

| | Carboxylic Acid in LiCoO₂ Film-Forming Precursor Solution (Formula: CₙH₂ₙ₊₁COOH) | | Organic Solvent for Diluting Solution | LiCoO₂ Film-Forming Precursor Solution | | Peak Intensity of Crystal Plane of LiCoO₂ Film (counts) |
|---|---|---|---|---|---|---|
| | Name | n in Formula | | Precipitates | Wettability | |
| Ex. 1 | 2-Ethylbutyric Acid | 5 | 1-Butanol | None | Satisfactory | 1553 |
| Ex. 2 | 2-EthylhexanoicAcid | 7 | 1-Butanol | None | Satisfactory | 1624 |
| Ex. 3 | Propionic Acid | 2 | 1-Butanol | None | Satisfactory | 547 |
| Ex. 4 | Pentanoic Acid | 4 | 1-Butanol | None | Satisfactory | 725 |
| Ex. 5 | Nonanoic Acid | 8 | 1-Butanol | None | Satisfactory | 484 |
| Ex. 6 | 2-Ethylbutyric Acid | 5 | 2-Ethylbutyric Acid | None | Satisfactory | 1310 |
| Ex. 7 | 2-Ethylbutyric Acid | 5 | 2-Ethylhexanoic Acid | None | Satisfactory | 1294 |
| Ex. 8 | 2-Ethylbutyric Acid | 5 | 3-Methylbutyl Acetate | None | Satisfactory | 1223 |
| Ex. 9 | 2-Ethylbutyric Acid | 5 | 1-Propanol | None | Satisfactory | 851 |
| Comp. Ex. 1 | Acetic Acid | 1 | 1-Butanol | Formed | - | - |
| Comp. Ex. 2 | Decanoic Acid | 9 | 1-Butanol | None | Unsatisfactory | - |

As clearly seen from Table 1, the following results were obtained. In the precursor solution of Comparative Example 1, precipitates were formed after being left to stand at room temperature for 1 day. On the other hand, in the precursor solutions of Examples 1 to 9, precipitates were not formed even after being left to stand at room temperature for 1 day, and storage stability was superior. In addition, in the precursor solution of Comparative Example 2, the wettability was poor, and the solution was not absorbed. On the other hand, in the precursor solutions of Examples 1 to 9, the wettability was superior, and the precursor solution was uniformly coated on the substrate. In addition, in the LiCoO₂ films of Examples 3 to 5, the peak intensity values of the crystal plane were low in a range from 484 counts to 725 counts, respectively. On the other hand, in the LiCoO₂ films of Examples 1 to 2, the peak intensity values of the crystal plane were high at 1553 counts and 1624 counts, respectively. It can be seen from the above results that, when 2-ethylbutylate or 2-ethylhexanoate is used as the organic lithium compound and the organic cobalt compound dissolved in the precursor solution, a LiCoO₂ film having higher crystallinity can be formed as compared to cases where propionate, pentanoate, or nonanoate is used as the organic lithium compound and the organic cobalt compound. Further, in the LiCoO₂ film of Example 9, the peak intensity value of the crystal plane was low at 851 counts. On the other hand, in LiCoO₂ films of Example 1 and 6 to 8, the peak intensity values of the crystal plane were high in a range from 1223 counts to 1624 counts, respectively. It can be seen from the above results that, 1-butanol, 2-ethylbutyric acid, 2-ethylhexanoic acid, or 3-methylbutyl acetate is used as the organic solvent for diluting the solution, a LiCoO₂ film having higher crystallinity can be formed as compared to cases where 1-propnaol is used as the organic solvent.

While preferred embodiments of the invention have been described and illustrated above, it should be understood that these are exemplary of the invention and are not to be considered as limiting. Additions, omissions, substitutions, and other modifications can be made without departing from the spirit or scope of the present invention. Accordingly, the invention is not to be considered as being limited by the foregoing description, and is only limited by the scope of the appended claims.

## Claims

1. A LiCoO₂ film-forming precursor solution used to form a LiCoO₂ film which is used as a positive electrode material of a thin film lithium secondary battery, the LiCoO₂ film-forming precursor solution comprising:
an organic lithium compound;
an organic cobalt compound; and
an organic solvent,
wherein the organic lithium compound is a lithium salt of a carboxylic acid represented by a formula CₙH₂ₙ₊₁COOH (wherein, 2≤n≤8).

2. The LiCoO₂ film-forming precursor solution according to claim 1,
wherein the organic cobalt compound is a cobalt salt of a carboxylic acid represented by a formula CₙH₂ₙ₊₁COOH (wherein, 2≤n≤8).

3. The LiCoO₂ film-forming precursor solution according to claim 1 or 2,
wherein the organic lithium compound is a lithium salt of 2-ethylbutyric acid or 2-ethylhexanoic acid, and
the organic cobalt compound is a cobalt salt of 2-ethylbutyric acid or 2-ethylhexanoic acid.

4. The LiCoO₂ film-forming precursor solution according to any one of claims 1 to 3,
wherein the organic solvent is 1-butanol, 2-ethylbutrylic acid, 2-ethylhexanoic acid, or 3-methylbutyl acetate.

5. A method of forming a LiCoO₂ film,
wherein the LiCoO₂ film-forming precursor solution according to any one of claims 1 to 4 is coated on a substrate to be used as a positive electrode material of a thin film lithium secondary battery.

6. A method of manufacturing a thin film lithium secondary battery which includes a LiCoO₂ film formed using the method according to claim 5.
